# EUROPEAN PATENT APPLICATION

(11) **EP 3 410 754 A1**
(43) Date of publication of application: **05.12.2018**
(21) Application number: 16888196.9
(22) Date of filing: 21.12.2016
(51) Int. Cl.: H04W 8/22, H04M 1/00, H04M 3/42, H04W 84/12, H04W 88/18, H04W 92/18

(54) **SERVER DEVICE, COMMUNICATION DEVICE AND METHOD**

(30) Priority: 29.01.2016 JP 2016015871
(71) Applicant: Sony Corporation, Tokyo 108-0075 (JP)
(72) Inventor: KAWAKAMI, Daisuke, Tokyo 108-0075 (JP); YAMAURA, Tomoya, Tokyo 108-0075 (JP); SUZUKI, Hideyuki, Tokyo 108-0075 (JP)
(74) Representative: Witte, Weller & Partner Patentanwälte mbB
(86) International application number: PCT/JP2016/088241
(87) International publication number: WO 2017/130612

(57) **Abstract**

[Object] To provide a server device that enables a communication terminal to know whether or not the communication terminal conforms to the services before executing the services using the communication network.

[Solution] There is provided a server device including: a processing unit that inquires presence or absence of conformity of a first communication device to a standard for using a service by using frame information sent with a using request of the service obtained from the first communication device, and notifies the first communication device whether or not the service is available, on a basis of an inquiring result.

## Description

### Technical Field

The present disclosure relates to a server device, a communication device, and a method.

### Background Art

In recent years, various services (hereinafter, simply referred to as "services") using a communication network such as the Internet or a wireless LAN have appeared. For example, many communication terminals with a communication function to a network of a smartphone, a mobile phone, or the like have a configuration to enable the use of services using such a communication network. For example, Patent Literature 1 discloses a procedure for using the services using the communication network between the communication terminals.

### Citation List

### Patent Literature

Patent Literature 1: WO 2013/153925

### Disclosure of Invention

### Technical Problem

However, in many cases, a user who possesses the communication terminal does not know whether the possessed communication terminal conforms to or complies with a standard of the services in a case of using the services. Therefore, for example, in a case of downloading application for use of the services to the communication terminal that does not conform to the standard of the services, the user consequently knows that the communication terminal does not conform to the services only after executing the application.

As a consequence, according to the disclosure, novel and improved server device, communication device, and method are proposed to enable a communication terminal to know whether or not the communication terminal conforms to the services before executing the services using the communication network.

### Solution to Problem

According to the present disclosure, there is provided a server device including: a processing unit that inquires presence or absence of conformity of a first communication device to a standard for using a service by using frame information sent with a using request of the service obtained from the first communication device, and notifies the first communication device whether or not the service is available, on a basis of an inquiring result.

In addition, according to the present disclosure, there is provided a communication device including: a processing unit that sends frame information to a server device with a using request of a service, and receives availability of the service from the server device, the availability being determined on a basis of the frame information.

In addition, according to the present disclosure, there is provided a method including: inquiring presence or absence of conformity of a first communication device to a standard for using a service by using frame information sent with a using request of the service obtained from the first communication device, and notifying the first communication device whether or not the service is available, on a basis of an inquiring result.

In addition, according to the present disclosure, there is provided a method including: sending frame information to a server device with a using request of a service, and receiving availability of the service from the server device, the availability being determined on a basis of the frame information.

### Advantageous Effects of Invention

According to the present disclosure, as mentioned above, it is possible to provide novel and improved server device, communication device, and method to enable the communication terminal to know whether or not a communication terminal conforms to the services before executing the services using the communication network.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating a configuration example of a communication system 1 according to a first embodiment of embodiments in the present disclosure.
[FIG. 2] FIG. 2 is an explanatory diagram illustrating a functional configuration example of a terminal device 100 according to the first embodiment of the embodiments.
[FIG. 3] FIG. 3 is an explanatory diagram illustrating a functional configuration example of a server 200 according to the first embodiment of the embodiments.
[FIG. 4] FIG. 4 is a flowchart illustrating an operational example of the communication system 1 according to the first embodiment of the embodiments.
[FIG. 5] FIG. 5 is an explanatory diagram illustrating an example of a user interface that is output to an output unit 140 in a case where the terminal device 100 according to the first embodiment of the embodiments uses services.
[FIG. 6] FIG. 6 is an explanatory diagram illustrating a configuration example of a communication system 2 according to a second embodiment of the embodiments.
[FIG. 7] FIG. 7 is a flowchart illustrating an operational example of the communication system 2 according to the second embodiment of the embodiments.
[FIG. 8] FIG. 8 is a flowchart illustrating an operational example of the communication system 2 according to the second embodiment of the embodiments.
[FIG. 9] FIG. 9 is a flowchart illustrating an operational example of the communication system 2 according to the second embodiment of the embodiments.
[FIG. 10] FIG. 10 is an explanatory diagram illustrating an example of a user interface that is output to an output unit 140 in a case where a terminal device 100a according to the second embodiment of the embodiments uses services.
[FIG. 11] FIG. 11 is a flowchart illustrating an operational example of a server 200 according to the second embodiment of the embodiments.
[FIG. 12] FIG. 12 is an explanatory diagram illustrating a configuration example of a communication system 3 according to a third embodiment of the embodiments.
[FIG. 13] FIG. 13 is a flowchart illustrating an operational example of the communication system 3 according to the third embodiment of the embodiments.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that the description will be given in the following order.
1. Embodiments of the present disclosure
   1.1. Outline
   1.2. First embodiment
   1.3. Second embodiment
   1.4. Third embodiment
2. Conclusion

### <1. Embodiments of the present disclosure>

### [1.1. Outline]

First, a description will be given of an outline of embodiments of the present disclosure. As mentioned above, various services using a communication network such as the Internet or a wireless LAN have appeared. Subsequently, for example, many communication terminals having a communication function to a network of a smartphone, a mobile phone, or the like have a configuration that services using such a communication network are available. Note that, as examples of the services, DLNA (Digital Living Network Alliance, registered trademark) service, a mirroring service of a video image and/or sound, and the like.

Subsequently, there is a variety of the communication terminals having the communication function to the network. Therefore, one communication terminal conforms to or complies with a standard of one service. However, there is a case where another communication terminal does not conform to the standard of the services or comply with the standard thereof. Subsequently, in many cases, the user who possesses the communication terminal does not know whether or not the possessed communication terminal conforms to or complies with the standard of the services in a case of using the services.

For example, a communication terminal manufactured by a company can use the services because a specific service is authenticated. On the other hand, a communication terminal that is manufactured by another company is not authenticated or is mounted uniquely and there can be therefore cases in which the same service is not available or is not normally operated. The problem results in a confusion because an end user cannot easily solve the problem. Further, there is a large burden to solve the problem for a service provider side.

The above-mentioned Patent Literature 1 discloses a procedure for using a mirroring service by using near field communication (NFC). It is premised that, in the technology disclosed in the Patent Literature 1, the communication terminal conforms to the mirroring service. Therefore, in a case where the communication terminal does not conform to or comply with the mirroring service, as long as the communication terminal does not display a message indicating a connection error, the user of the communication terminal does not find that the communication terminal cannot use the mirroring service.

As a consequence, according to the present disclosure, in consideration of the above-mentioned contents, such a technology is considered that the communication terminal can know whether or not the communication terminal conforms to the service using the communication network before executing the service. As a consequence, according to the present disclosure, such a technology is devised to enable the communication terminal to know whether or not the communication terminal conforms to the service using the communication network before executing the service, which will be described below.

Hereinbelow, a description will be given of the outline according to the embodiments of the present disclosure. Subsequently, a specific description will be given of the embodiments in the present disclosure.

### [1.2. First embodiment]

### (1.2.1. System configuration example)

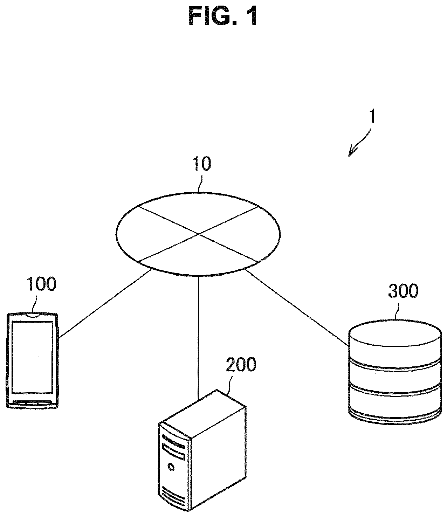

First of all, a first embodiment will be described. FIG. 1 is an explanatory diagram illustrating a configuration example of a communication system according to the first embodiment of the embodiments in the present disclosure. Hereinafter, a description will be given of the configuration example of the communication system according to the first embodiment of the embodiments in the present disclosure with reference to FIG. 1.

As illustrated in FIG. 1, a communication system 1 according to the first embodiment of the embodiments in the present disclosure includes a terminal device 100, a server 200, and a database 300. The terminal device 100, the server 200, and the database 300 are respectively connected to the same network 10. The network 10 can be, for example, the Internet.

The terminal device 100 is a device having a communication function to the network 10. The terminal device 100 can be, for example, a smartphone, a tablet terminal, or the like. The terminal device 100 can execute various services using the network. Note that only one terminal device 100 is illustrated in FIG. 1. However, the number of the terminal devices 100 is not limited to one. Obviously, it can be considered that the same user can possess a plurality of the terminal devices 100 and use the service. An embodiment in which a plurality of the terminal devices 100 are provided will be specifically described later.

The server 200 is a device having the communication function to the network 10. The server 200 processes a request sent from the terminal device 100 via the network 10, and sends a response to the request to the terminal device 100 via the network 10. Further, the server 200 issues an inquiry addressed to the database 300 in a case of processing the request sent from the terminal device 100. Note that the server 200 may hold therein, as cache, contents that are asked to the database 300 once.

Further, the server 200 can hold application used in a case where the terminal device 100 executes the service. The server 200 receives a downloading request of the application from the terminal device 100, and sends the application to the terminal device 100 in response to the request. In this case, only in a case where the terminal device 100 can execute the service, the server 200 sends the application to the terminal device 100 in response to the downloading request of the application.

The database 300 is a device having the communication function to the network 10. The database 300 stores various kinds of data, and according to the embodiment, stores, for example, a set of data in which manufacturer information of a device authenticated for a predetermined service, device information, software version, and the like are recorded as records. The information recorded in the database 300 is mainly referred to and read from the server 200.

The above description is given of the configuration example of the communication system according to the first embodiment of the embodiments in the present disclosure with reference to FIG. 1. Subsequently, a description will be given of a functional configuration example of the terminal device 100 according to the first embodiment of the embodiments in the present disclosure.

### (1.2.2. Functional configuration example)

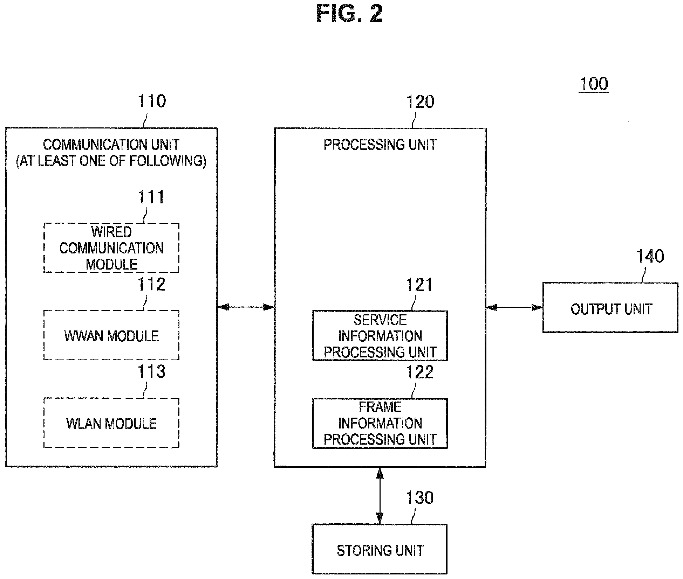

FIG. 2 is an explanatory diagram illustrating a functional configuration example of the terminal device 100 according to the first embodiment of the embodiments in the present disclosure. Hereinafter, a description will be given of the functional configuration example of the terminal device 100 according to the first embodiment of the embodiments in the present disclosure with reference to FIG. 2.

As illustrated in FIG. 2, the terminal device 100 according to the first embodiment of the embodiments in the present disclosure includes a communication unit 110, a processing unit 120, a storing unit 130, and an output unit 140.

The communication unit 110 communicates with an external device, for example, the server 200 via the network 10. The communication unit 110 includes at least one of, for example, a wired communication module 111, a wireless wide area network (WWAN) module 112, and a wireless local area network (WLAN) module 113. The communication unit 110 sends data received from the external device to the processing unit 120. Further, the communication unit 110 receives data to be sent to the external device from the processing unit 120.

The processing unit 120 processes various kinds of operations in the terminal device 100. The processing unit 120 includes, for example, a central processing unit (CPU), various read only memories (ROMs) and random access memories (RAMs), and the like.

According to the embodiment, the processing unit 120 includes, for example, a service information processing unit 121, and a frame information processing unit 122.

The service information processing unit 121 sends a request of a service to be executed to the server 200. Further, in a case where the server 200 determines that the terminal device 100 can execute the service to be executed, the service information processing unit 121 receives the application sent from the server 200. The service information processing unit 121 allows the storing unit 130 to store the received application.

The frame information processing unit 122 performs various kinds of processing about frame information. For example, the frame information processing unit 122 performs a procedure for sending the frame information provided for the terminal device 100 to the server 200. As the frame information provided for the terminal device 100, there is a, for example, a Wi-Fi simple config information element (WSC IE). Also, for example, the frame information processing unit 122 performs a communication procedure using the frame information sent from the server 200. As the frame information sent from the server 200, there are, for example, a peer to peer information element (P2P IE) and a Wi-Fi display information element (WFD IE). As the communication procedure using the frame information sent from the server 200, there is, for example, establishment of communication with another terminal device. By using the frame information sent form the server 200, it is possible to quickly establish the communication with another terminal device.

The storing unit 130 can include, for example, a non-volatile memory such as a flash memory. The storing unit 130 stores the above-mentioned frame information, service information for using the services, application, and the like. As the service information for using the services, there can be ID and a password of a user that is registered to the services.

The output unit 140 can include, for example, a display, a speaker, an indicator, and the like. The output unit 140 also presents, for example, a situation of communication processing with the server 200, a using situation of the services, and the like with a character, an image, an illustration, sound, light, or the like.

In addition, although not illustrated in FIG. 2, the terminal device 100 has a battery. The battery can include a dischargeable lithium-ion secondary battery, or the like.

Further, although not illustrated in FIG. 2, the terminal device 100 may contain therein at least one of various sensors such as a positioning sensor, an acceleration sensor, a gyroscope sensor, a geomagnetic sensor, an illuminance sensor, a temperature sensor, a barometric sensor, and a heartbeat sensor. Note that, as the above-mentioned positioning sensor, for example, specifically, a global navigation satellite system (GNSS) receiver, and/or a communication device, or the like can be included. The GNSS can include, for example, a global positioning system (GPS), a global navigation satellite system (GLONASS), a BeiDou navigation satellite system (BDS), a quasi-zenith satellites system (QZSS), Galileo, or the like. Further, as the positioning sensor, it is possible to include a sensor that can detect a position by using a technology, for example, a wireless LAN, a multi-input multi-output (MIMO), cellular communication (for example, positional detection using a mobile base station or femtocell), near field communication (for example, Bluetooth Low Energy (BLE), Bluetooth (registered trademark), or the like.

The above-description is given of the functional configuration example of the terminal device 100 according to the first embodiment of the embodiments in the present disclosure with reference to FIG. 2. Subsequently, a description will be given of a functional configuration example of the server 200 according to the first embodiment of the embodiments in the present disclosure.

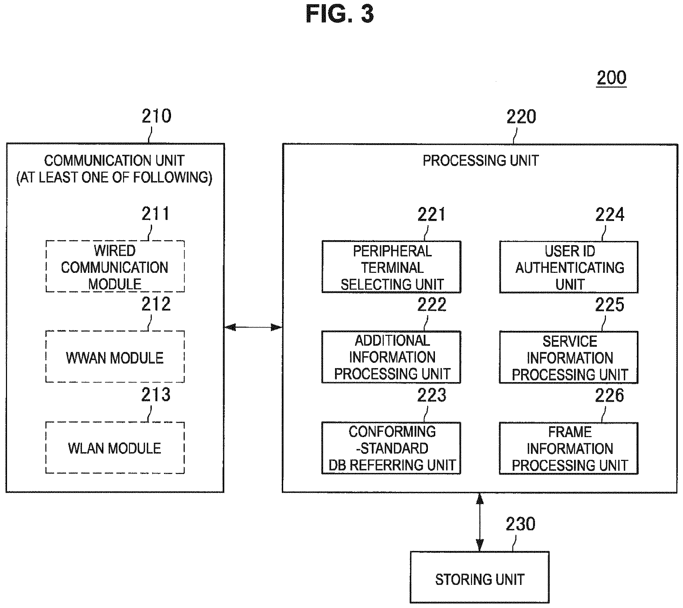

FIG. 3 is an explanatory diagram illustrating the functional configuration example of the server 200 according to the first embodiment of the embodiments in the present disclosure. Hereinafter, a description will be given of the functional configuration example of the server 200 according to the first embodiment of the embodiments in the present disclosure with reference to FIG. 3.

As illustrated in FIG. 3, the server 200 according to the first embodiment of the embodiments in the present disclosure includes a communication unit 210, a processing unit 220, and a storing unit 230.

The communication unit 210 communicates an external device via the network 10 with, for example, the terminal device 100 or the database 300. The communication unit 210 has, for example, at least one of a wired communication module 211, a WWAN module 212, and a WLAN module 213. The communication unit 210 sends data received from the external device to the processing unit 220. Further, the communication unit 210 receives data to be sent to the external device from the processing unit 220.

The processing unit 220 processes various operations in the server 200. The processing unit 220 can include, for example, a CPU, various ROMs and RAMs, and the like.

According to the embodiment, the processing unit 220 includes, for example, a peripheral terminal selecting unit 221, an additional information processing unit 222, a conforming-standard DB referring unit 223, a user ID authenticating unit 224, a service information processing unit 225, and a frame information processing unit 226.

The peripheral terminal selecting unit 221 selects a peripheral terminal conforming to the terminal device 100 on the basis of login information of the terminal device 100 or service identification information. For example, in a case where there is the terminal device 100 that logs in the server 200 with specific user ID, the peripheral terminal selecting unit 221 performs processing for searching and finding whether or not there is another terminal device 100 that logs in with the same user ID therearound.

The additional information processing unit 222 estimates a distance between a plurality of terminal devices on the basis of positional information of the terminal device 100 or information such as a remaining amount of a battery, and executes switching of a communication system. Further, the additional information processing unit 222 assigns a large amount of resources of communication or information distribution to a terminal device with a large remaining amount of the battery.

The conforming-standard DB referring unit 223 checks whether or not there is a terminal whose authentication is obtained, conforming to the frame information obtained from the terminal device 100, in the database 300 by referring to the database 300. Subsequently, the conforming-standard DB referring unit 223 performs a procedure for sending a reference result of the database 300 to the terminal device 100.

The user ID authenticating unit 224 performs authenticating processing in response to a login request sent from the terminal device 100. The user ID authenticating unit 224 performs authentication using the user information or password stored in the storing unit 230 in a case of the authenticating processing. If the login request from the terminal device 100 does not have any problems, the user ID authenticating unit 224 permits the login of the terminal device 100. However, if the login request has a problem, the user ID authenticating unit 224 does not permit the login of the terminal device 100. Subsequently, the user ID authenticating unit 224 performs a procedure for sending a result of the authenticating processing to the terminal device 100.

The service information processing unit 225 executes internal processing in response to a service request sent from the terminal device 100, and also provides services to the terminal device 100 if necessary.

The frame information processing unit 226 analyzes the frame information sent from the terminal device 100. Information obtained by analyzing the frame information is used for referring processing of the database 300 in the conforming-standard DB referring unit 223. Further, the frame information processing unit 226 performs a procedure for transferring the frame information (P2P IE or WFD IE) sent from the terminal device 100 to another terminal device. The frame information (P2P IE or WFD IE) sent from the terminal device 100 is transferred to another terminal device, thereby reducing a connecting time.

The storing unit 230 stores various kinds of information. The storing unit 230 includes, for example, a hard disk drive, or the like. The storing unit 230 stores, for example, the frame information or the service information sent from the terminal device 100, the reference result of the database 300, and the like. The reference result of the database 300 by the conforming-standard DB referring unit 223 can be cached to the storing unit 230. The reference result of the database 300 by the conforming-standard DB referring unit 223 is cached to the storing unit 230, thereby saving labor for referring to the same information to the database 300 by the conforming-standard DB referring unit 223 and increasing the speed of the referring processing by the conforming-standard DB referring unit 223.

The above description is given of the functional configuration example of the server 200 according to the first embodiment of the embodiments in the present disclosure with reference to FIG. 3. Subsequently, a description will be given of an operational example of the communication system 1 according to the first embodiment of the embodiments in the present disclosure.

### (1.2.3. Operational example)

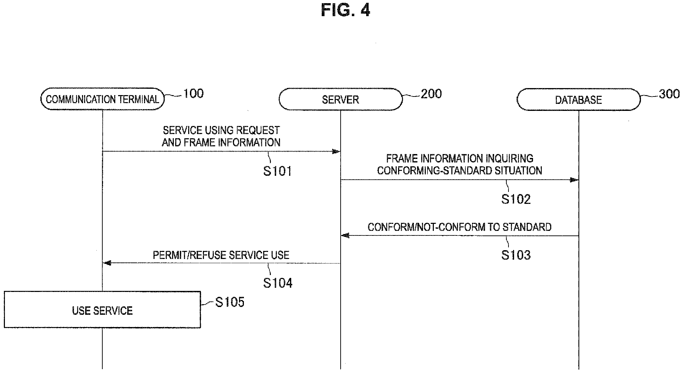

FIG. 4 is a flowchart illustrating an operational example of the communication system 1 according to the first embodiment of the embodiments in the present disclosure. FIG. 4 illustrates a sequence diagram of an operational flow of the terminal device 100, the server 200, and the database 300 in a case where the terminal device 100 newly uses services. Hereinafter, a description will be given of the operational example of the communication system 1 according to the first embodiment of the embodiments in the present disclosure with reference to FIG. 4.

In the case where the terminal device 100 newly uses a service, the terminal device 100 sends a service using request to the server 200 that provides the service, and also sends the frame information of the terminal device 100 to the server 200 (step S101). Processing in step S101 is executed by, for example, the service information processing unit 121 and the frame information processing unit 122. In a case where the terminal device 100 sends the frame information of the terminal device 100 to the server 200, information of a version number of the terminal device 100 may be included.

The server 200 that receives the service using request and the frame information of the terminal device 100 from the terminal device 100 analyzes the frame information of the terminal device 100. Subsequently, the server 200 inquires a conforming-standard situation of the terminal device 100a from the database 300 on the basis of information included in the frame information (step S102). The inquiring processing in step S102 is executed by, for example, the conforming-standard DB referring unit 223.

The database 300 returns the conforming-standard situation of the terminal device 100 to the server 200 in response to the inquiry from the server 200 (step S103). In a case where there is corresponding information in the terminal device 100 in a database of the authenticated terminal, the database 300 informs that the terminal device 100 conforms to the standard to the server 200. In a case where there is not the corresponding information, the database 300 informs that the terminal device 100 does not conform to the standard to the server 200.

The server 200 notifies the terminal device 100 whether or not the service is available, on the basis of the conforming-standard situation of the terminal device 100 obtained from the database 300 (step S104). Processing in step S104 is executed by, for example, the service information processing unit 225. In a case where the terminal device 100 that sends the service using request in step S101 conforms to the standard of services, the server 200 permits the service use to the terminal device 100. On the other hand, in a case where the terminal device 100 does not conform to the standard of services, the server 200 does not permit the service use to the terminal device 100.

The terminal device 100 receives the notification about whether or not the service is available from the server 200 in the above step S104, and the starts the use of service in a case where the service is available, and ends a series of procedures in a case where the use of service is refused (step S105). In the case where the service is available, the terminal device 100 enters, for example, a downloadable state of the application for using the services. Further, in the case where the service is not available, the terminal device 100 outputs, for example, a screen that the service is not available to the output unit 140.

The above description is given of the operational example of the communication system 1 according to the first embodiment of the embodiments in the present disclosure. Subsequently, an example of the user interface (UI) output to the output unit 140 is illustrated in the case where the terminal device 100 uses the service.

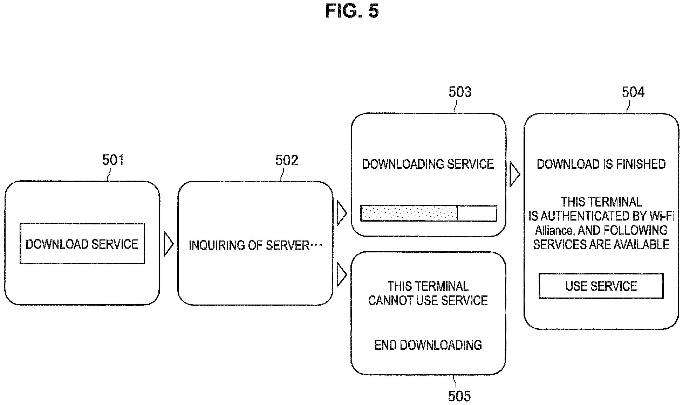

FIG. 5 is an explanatory diagram illustrating an example of the user interface output to the output unit 140 in the case where the terminal device 100 according to the embodiment in the present disclosure uses the service.

Reference numeral 501 is an example of a UI in a case where the terminal device 100 accesses a page of services provided by the server 200 in the service use of the terminal device 100. The user selects "download service" at the UI, and the terminal device 100 shifts to a UI that inquires whether or not the terminal device 100 illustrated by reference numeral 502 conforms to the standard. While the terminal device 100 outputs the UI illustrated by reference numeral 502, the above-mentioned series of processing is performed in the terminal device 100, the server 200, and the database 300.

If the terminal device 100 conforms to the standard as the result inquiring of the server 200, the terminal device 100 shifts to a UI that downloads the service illustrated by reference numeral 503. Subsequently, the terminal device 100 shifts to a UI that displays information indicating the device conforms to the standard illustrated by reference numeral 504 after finishing to download the service. The available service is displayed at the UI. If the user selects "use service", the terminal device 100 starts to use the downloaded service.

On the other hand, if the terminal device 100 does not conform to the standard as the result inquiring of the server 200, the terminal device 100 shifts to a UI displaying contents that the service is not available, illustrated by reference numeral 505. The terminal device 100 does not download the service if the device does not conform to the standard.

The terminal device 100 according to the embodiment in the present disclosure executes the above-mentioned series of operations, thereby making it possible to know whether or not the terminal device 100 conforms to the service before executing the service using the communication network. Further, the server 200 according to the embodiment in the present disclosure can notify the terminal device 100 whether or not the terminal device 100 conforms to the service before executing the services using the communication network by executing the above-mentioned series of operations.

Therefore, the terminal device 100 according to the embodiment in the present disclosure can present whether or not the possessed terminal device 100 conforms to or complies with the standard of services to the user of the terminal device 100 in a case of using the services.

### [1.3. Second embodiment]

### (1.3.1. System configuration example)

Subsequently, a description will be given of a second embodiment of the embodiments in the present disclosure. According to the first embodiment, as mentioned above, the case of connecting one terminal device 100 to the network 10 is illustrated. According to the second embodiment, a description will be given of a case where the same user connects a plurality of the terminal devices 100 to the network 10 and uses the devices.

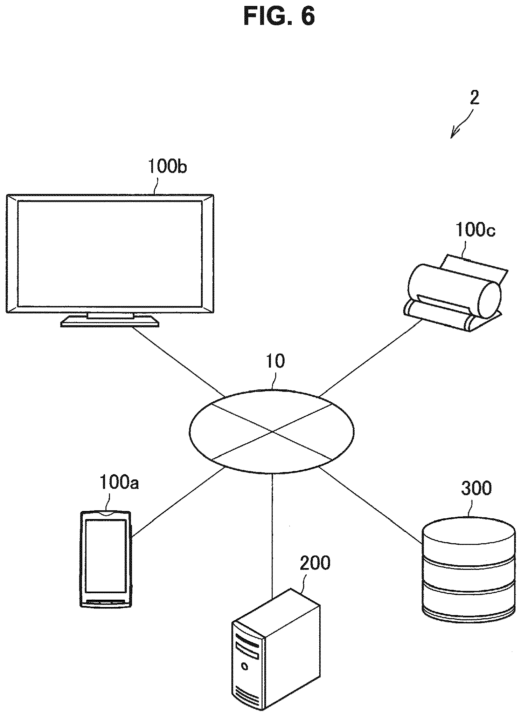

FIG. 6 is an explanatory diagram illustrating a configuration example of a communication system according to the second embodiment of the embodiments in the present disclosure. Hereinafter, a description will be given of the configuration example of the communication system according to the second embodiment of the embodiments in the present disclosure with reference to FIG. 6.

As illustrated in FIG. 6, the communication system 2 according to the second embodiment of the embodiments in the present disclosure includes terminal devices 100a, 100b, and 100c, the server 200, and the database 300. The terminal devices 100a, 100b, and 100c, the server 200, and the database 300 are respectively connected to the same network 10. The network 10 can be, for example, the Internet.

The terminal device 100a, 100b, and 100c are devices individually having the communication function to the network 10. According to the second embodiment, as illustrated in the drawing, the terminal device 100a is a smartphone or a tablet terminal, the terminal device 100b is a monitor for TV or desktop PC, and the terminal device 100c is a printer with a printing function. Obviously, the respective terminal devices are not limited to the examples.

Note that specific configurations of the terminal devices 100a, 100b, and 100c are similar to that of the terminal device 100 according to the first embodiment, and a specific description thereof is thus omitted here.

The server 200 and the database 300 are individual devices having the communication function to the network 10, and specific configurations thereof are similar to those according to the first embodiment. Therefore, a specific description thereof is omitted.

The above description is given of a configuration example of the communication system according to the second embodiment of the embodiments in the present disclosure with reference to FIG. 6. Subsequently, a description will be given of an operational example of the communication system according to the second embodiment of the embodiments in the present disclosure.

### (1.3.2. Operational example)

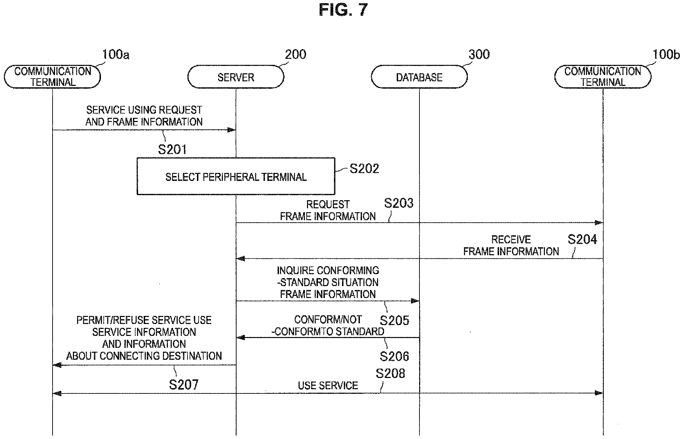

FIG. 7 is a flowchart illustrating an operational example of the communication system 2 according to the second embodiment of the embodiments in the present disclosure. FIG. 7 illustrates a sequence diagram of operational flows of the terminal devices 100a and 100b, the server 200, and the database 300 in a case where the terminal device 100a newly uses a service. Hereinafter, a description will be given of the operational example of the communication system 2 according to the second embodiment of the embodiments in the present disclosure with reference to FIG. 7.

In a case of newly using a service, the terminal device 100a sends a service using request to the server 200 that provides the service and also sends the frame information of the terminal device 100a to the server 200 (step S201). The processing in step S201 is executed by, for example, the service information processing unit 121 and the frame information processing unit 122. The terminal device 100 may include information of a version number of the terminal device 100 in a case of sending the frame information of the terminal device 100 to the server 200. Herein, it is assumed that the service used by the terminal device 100a is a service that is used with connection to another terminal device (herein, the terminal device 100b), for example, Wi-Fi direct service (WFDS) using P2P or a mirroring service.

The server 200 that receives the service using request and the frame information of the terminal device 100a from the terminal device 100a selects the peripheral terminal capable of cooperating with the terminal device 100a (step S202). Processing in step S202 is executed by, for example, the peripheral terminal selecting unit 221. An example of the processing for selecting the peripheral terminal is given. In a case where there is a peripheral terminal (herein, the terminal device 100b) that logs in with the same ID as the user ID of the terminal device 100a, the server 200 selects the terminal device 100b as the peripheral terminal. Obviously, the server 200 also can use a condition except for the login with the same user ID as the processing for selecting the peripheral terminal.

Note that if there is not the peripheral terminal, the server 200 executes the same operation as that according to the first embodiment.

The server 200 selects the peripheral terminal and requests the frame information from the selected peripheral terminal (terminal device 100b) (step S203). Processing in step S203 is executed by, for example, the frame information processing unit 226.

The terminal device 100b that receives the request of the frame information from the server 200 sends the frame information of the terminal device 100b to the server 200 (step S204). Processing in step S204 is executed by, for example, the frame information processing unit 122. The frame information sent by the terminal device 100b includes at least WSC IE of the terminal device 100b, and may additionally include P2P IE, WFD IE, or the like.

The server 200 that receives the frame information from the terminal device 100b analyzes the frame information of the terminal devices 100a and 100b. Subsequently, the server 200 inquires the conforming-standard situation of the terminal devices 100a and 100b from the database 300 on the basis of the information included in the frame information (step S205). The inquiring processing in step S205 is executed by, for example, the conforming-standard DB referring unit 223.

The database 300 returns the conforming-standard situations of the terminal devices 100a and 100b to the server 200 in response to the inquiry from the server 200 (step S206). In a case where there is information corresponding to the terminal devices 100a and 100b in a database of an authenticated terminal, the database 300 notifies the server 200 that the terminal devices 100a and 100b conform to the standard. On the other hand, if there is not the information corresponding to the terminal devices 100a and 100b in the database of the authenticated terminal, the database 300 notifies the server 200 that the terminal devices 100a and 100b do not conform to the standard.

The server 200 notifies the terminal device 100a whether or not the service is available, on the basis of the conforming-standard situation of the terminal device 100a obtained from the database 300 (step S207). Processing in step S207 is executed by, for example, the service information processing unit 225. Further, in a case where the terminal device 100a can use the service, the server 200 also sends the information of the terminal device 100b as the connecting destination in addition to the service information to the terminal device 100a. The information of the terminal device 100b as the connecting destination is, for example, information necessary for connection to the terminal device 100b by the terminal device 100a, for example, P2P IE, WFD IE received from the terminal device 100b by the server 200, or the like.

The terminal device 100a receives the notification about whether or not the service is available from the server 200 in the step S207. In a case where the service is available, the use of service starts and, in a case where the use of the service is refused, a series of procedures ends (step S208). In a case where the service is available, the terminal device 100a enters, for example, a downloadable state of the application for using the services. Further, in a case where the service is not available, the terminal device 100a outputs, to the output unit 140, for example, a screen indicating that the service is not available.

Subsequently, the terminal device 100a is connected to the terminal device 100b by using the information of the terminal device 100b as the connecting destination sent from the server 200, thereby performing the use of the service.

The above description is given of the operational example of the communication system 2 according to the second embodiment of the embodiments in the present disclosure with reference to FIG. 7. FIG. 7 illustrates the example in which the server 200 inquires the conforming-standard situation from the database 300. If the contents that are inquired once are cached in the server 200, the inquiry of the conforming-standard situation which is addressed to the database 300 can be changed to read the cache.

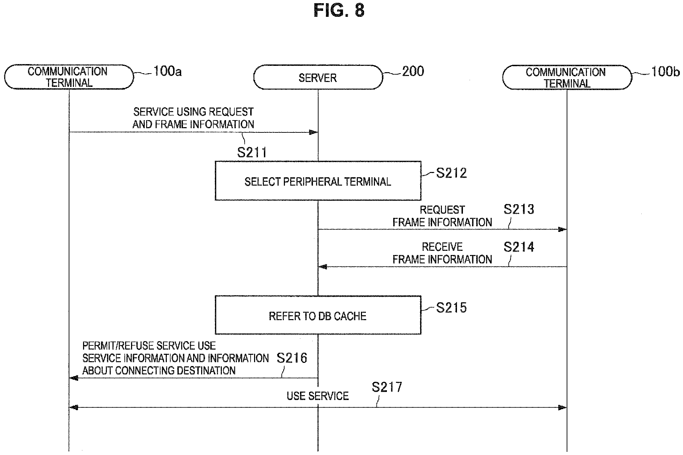

FIG. 8 is a flowchart illustrating an operational example of the communication system 2 according to the second embodiment of the embodiments in the present disclosure. FIG. 8 illustrates a sequence diagram of operational flows of the terminal devices 100a and 100b and the server 200 in a case where the terminal device 100a newly uses a service. Hereinafter, a description will be given of the operational example of the communication system 2 according to the second embodiment of the embodiments in the present disclosure with reference to FIG. 8.

In a case of newly using a service, the terminal device 100a sends a service using request to the server 200 that provides the service, and also sends the frame information of the terminal device 100 to the server 200 (step S211). Processing in step S211 is executed by, for example, the service information processing unit 121 and the frame information processing unit 122. In a case where the terminal device 100 sends the frame information of the terminal device 100 to the server 200, information of the version number of the terminal device 100 may be included. Herein, it is assumed that the service used by the terminal device 100a is a service used with connection to another terminal device (herein, the terminal device 100b), for example, WFDS using P2P or a mirroring service.

The server 200 that receives the service using request and the frame information of the terminal device 100 from the terminal device 100a selects a peripheral terminal capable of cooperating with the terminal device 100a (step S212). Processing in step S212 is executed by, for example, the peripheral terminal selecting unit 221. An example of the processing for selecting the peripheral terminal is given. In a case where there is a peripheral terminal (herein, the terminal device 100b) that logs in with the same ID as the user ID of the terminal device 100a, the server 200 selects the terminal device 100b as the peripheral terminal. Obviously, the server 200 can use a condition except for the login with the same user ID as the processing for selecting the peripheral terminal.

Note that, in a case where there is not the peripheral terminal, the server 200 executes the same operation as that according to the first embodiment.

The server 200 selects the peripheral terminal, and requests the frame information from the selected peripheral terminal (terminal device 100b) (step S213). Processing in step S213 is executed by, for example, the frame information processing unit 226.

The terminal device 100b that receives the request of the frame information from the server 200 sends the frame information of the terminal device 100b to the server 200 (step S214). Processing in step S214 is executed by, for example, the frame information processing unit 122. The frame information sent by the terminal device 100b includes at least WSC IE of the terminal device 100b, and may additionally include P2P IE, WFD IE, or the like.

The server 200 that receives the frame information from the terminal device 100b analyzes the frame information of the terminal devices 100a and 100b, and refers to the cache of the database stored in the storing unit 230 on the basis of the information included in the frame information (step S215). Processing in step S215 is executed by, for example, the frame information processing unit 226.

Subsequently, the server 200 notifies the terminal device 100a whether or not the service is available, on the basis of the conforming-standard situation of the terminal device 100a obtained from the cache (step S216). Processing in step S216 is executed by, for example, the service information processing unit 225. Further, in a case where the terminal device 100a can use the service, the server 200 also sends information of the terminal device 100b as the connecting destination in addition to the service information to the terminal device 100a. The information of the terminal device 100b as the connecting destination is, for example, information necessary for connection to the terminal device 100b by the terminal device 100a, such as P2P IE or WFD IE that is received from the terminal device 100b by the server 200.

The terminal device 100a receives the notification about whether or not the service is available from the server 200 in the step S216, and starts the use of the service in the case where the service is available and ends a series of procedures in a case where the use of the service is refused (step S217). The terminal device 100a enters, for example, a downloadable state of the application for using the services in the case where the service is available. Further, in the case where the service is not available, the terminal device 100a outputs, to the output unit 140, for example, a screen indicating that the service is not available.

Note that, in the case where there is the information of the terminal devices 100a and 100b in the cache, the server 200 gives the terminal devices 100a and 100b the service using permission as mentioned above. On the other hand, in the case where there is not the information of the terminal devices 100a and 100b in the cache, as illustrated in the flowchart in FIG. 7, the server 200 issues an inquiry addressed to the database 300. In a case where there is not the corresponding terminal as an inquiring result of the database 300, the use of the service is refused to the terminal devices 100a and 100b. The server 200 periodically inquires contents that are cached once from the database 300. In a case where the contents are old, the cache may be updated. Further, the server 200 may delete, for example, the cache that is not referred to for a predetermined period or more (e.g., one month or more, several months or more, one year or more, or the like).

The above description is given of the operational example of the communication system 2 according to the second embodiment of the embodiments in the present disclosure with reference to FIG. 8. Subsequently, a description will be given of an operational example in a case where the terminal devices 100a, 100b, and 100c use a plurality of services in cooperation with each other.

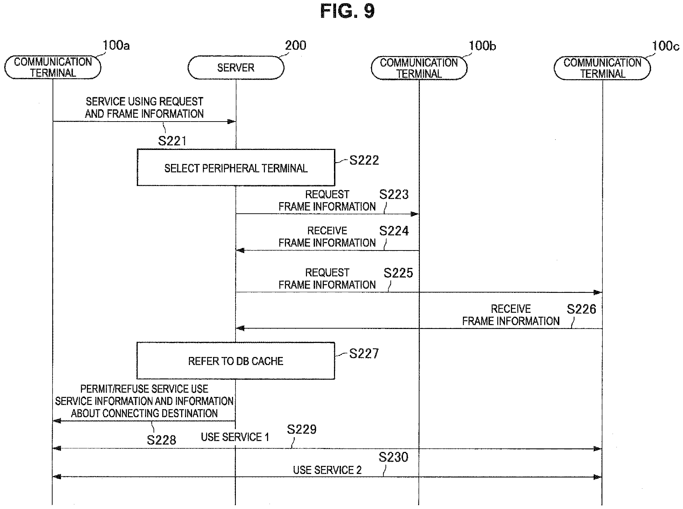

FIG. 9 is a flowchart illustrating an operational example of the communication system 2 according to the second embodiment of the embodiments in the present disclosure. FIG. 9 illustrates a sequence diagram of operational flows of the terminal devices 100a, 100b, and 100c and the server 200 in a case where the terminal device 100a newly uses a service. Hereinafter, a description will be given of the operational example of the communication system 2 according to the second embodiment of the embodiments in the present disclosure with reference to FIG. 9.

In a case of newly using a service, the terminal device 100a sends the service using request to the server 200 that provides the service, and also sends frame information of the terminal device 100 to the server 200 (step S221). Processing in step S221 is executed by, for example, the service information processing unit 121 and the frame information processing unit 122. In a case where the terminal device 100 sends the frame information of the terminal device 100 to the server 200, information of a version number of the terminal device 100 may be included. Herein, it is assumed that the service used by the terminal device 100a is a service that is used with connection to another terminal device (herein, the terminal device 100b), for example, WFDS using P2P, a mirroring service, a printing service, or the like.

The server 200 that receives the service using request and the frame information of the terminal device 100 from the terminal device 100a selects a peripheral terminal capable of cooperating with the terminal device 100a (step S222). Processing in step S222 is executed by, for example, the peripheral terminal selecting unit 221. An example of processing for selecting the peripheral terminal is given. In a case where there is a peripheral terminal (herein, the terminal devices 100b and 100c) that log in with the same ID as the user ID of the terminal device 100a, the server 200 selects, as the peripheral terminal, the terminal devices 100b and 100c. Obviously, the server 200 also can use a condition except for the login with the same user ID, as the processing for selecting the peripheral terminal.

Note that, in a case where there is not the peripheral terminal, the server 200 executes the same operation as that according to the first embodiment.

The server 200 selects the peripheral terminal, and requests the frame information from the selected peripheral terminal (terminal devices 100b and 100c) (steps S223 and S225). Processing in steps S223 and S225 is executed by, for example, the frame information processing unit 226.

The terminal device 100b that receives the request of the frame information from the server 200 sends the frame information of the terminal device 100b to the server 200 (step S224). Similarly, the terminal device 100c that receives the request of the frame information from the server 200 sends the frame information of the terminal device 100c to the server 200 (step S226). Processing in steps S224 and S226 is executed by, for example, the frame information processing unit 122. The frame information sent by the terminal devices 100b and 100c includes at least WSC IE of the terminal devices 100b and 100c, and may additionally include P2P IE, WFD IE, or the like.

The server 200 that receives the frame information from the terminal devices 100b and 100c analyzes the frame information of the terminal devices 100a, 100b, and 100c. Subsequently, the server 200 refers to the cache of the database stored in the storing unit 230 on the basis of the information included in the frame information (step S227). Processing in step S227 is executed by, for example, the frame information processing unit 226.

Subsequently, the server 200 notifies the terminal device 100a whether or not the service is available on the basis of the conforming-standard situation of the terminal device 100a obtained from the cache (step S228). Processing in step S228 is executed by, for example, the service information processing unit 225. Further, in a case where the terminal device 100a can use the service, the server 200 also sends the information of the terminal devices 100b and 100c as the connecting destination in addition to the service information to the terminal device 100a. The information of the terminal devices 100b and 100c as the connecting destination is, for example, information necessary for connecting the terminal device 100a to the terminal devices 100b and 100c, e.g., P2P IE, WFD IE received from the terminal devices 100b and 100c by the server 200, or the like.

The terminal device 100a receives the notification about whether or not the service is available from the server 200 in the step S228, and starts the use of the service in the case where the service is available and ends a series of procedures in the case where the use of the service is refused (steps S229 and S230). In the example illustrated in FIG. 9, the terminal device 100a uses a first service in cooperation with the terminal device 100b, and also uses a second service in cooperation with the terminal device 100c. In the case where the service is available, the terminal device 100a enters, for example, a downloadable state of application for using the services. Further, in the case where the service is not available, the terminal device 100a outputs, to the output unit 140, for example, a screen indicating that the service is not available.

Note that, in a case where there is the information of the terminal devices 100a, 100b, and 100c in the cache, the server 200 gives the terminal devices 100a, 100b, and 100c the service using permission, as mentioned above. On the other hand, in a case where there is not the information of the terminal devices 100a, 100b, and 100c in the cache, the server 200 issues an inquiry addressed to the database 300, as in the flowchart in FIG. 7. In a case where there is not the corresponding terminal as an inquiring result of the database 300, the use of the service is refused to the terminal devices 100a, 100b, and 100c. The server 200 periodically inquires contents that are cached once from the database 300. In a case where the contents are old, the cache may be updated. Further, the server 200 may delete, for example, the cache that is not referred to for a predetermined period or more (for example, one month or more, several months or more, one year or more, or the like).

The above description is given of the operational example of the communication system 2 according to the second embodiment of the embodiments in the present disclosure with reference to FIG. 9. Subsequently, an example of a user interface (UI) output to the output unit 140 will be illustrated in a case where the terminal device 100 uses the service.

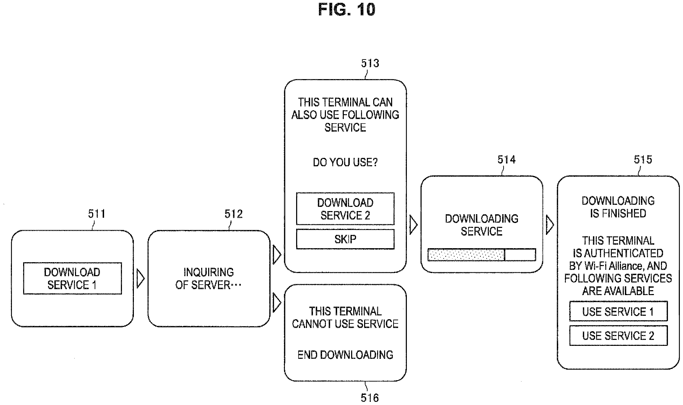

FIG. 10 is an explanatory diagram illustrating an example of the user interface output to the output unit 140 in a case where the terminal device 100a according to the second embodiment of the embodiments in the present disclosure uses the service.

Reference numeral 511 is an example of the UI in a case where the terminal device 100a uses the service and the terminal device 100a accesses a page of services provided by the server 200. At the UI, the user selects "download service". The terminal device 100a shifts to the UI for inquiring whether or not the terminal device 100 illustrated by reference numeral 512 conforms to the standard. While the terminal device 100 outputs the UI illustrated by reference numeral 512, the above-mentioned series of the processing is performed between the terminal devices 100a and 100b and the server 200 (including the terminal device 100c and the database 300 depending on a case).

If the terminal device 100a conforms to the standard as an inquiring result of the server 200, the terminal device 100 shifts to a UI illustrated by reference numeral 513 for allowing a user to select whether another service is downloaded or the downloading of another service is skipped. In a case of selecting any of both the cases, subsequently, the terminal device 100a shifts to a UI for downloading the service illustrated by reference numeral 514. Subsequently, the downloading of the service is finished, and the terminal device 100 shifts to a UI displayed by information indicating the conformity to the standard illustrated by reference numeral 515. At the UI, an available service is displayed. If the user selects "download service 2" at the UI illustrated by reference numeral 513, as illustrated in FIG. 10, two services are displayed at the UI illustrated by reference numeral 515. The user selects "use service 1" or "use service 2", and the terminal device 100a starts to use the downloaded service.

On the other hand, if the terminal device 100 does not conform to the standard as an inquiring result of the server 200, the terminal device 100 shifts to a UI displaying contents that the service is not available, illustrated by reference numeral 516. If the terminal device 100 does not conform to the standard, the terminal device 100 does not download the service.

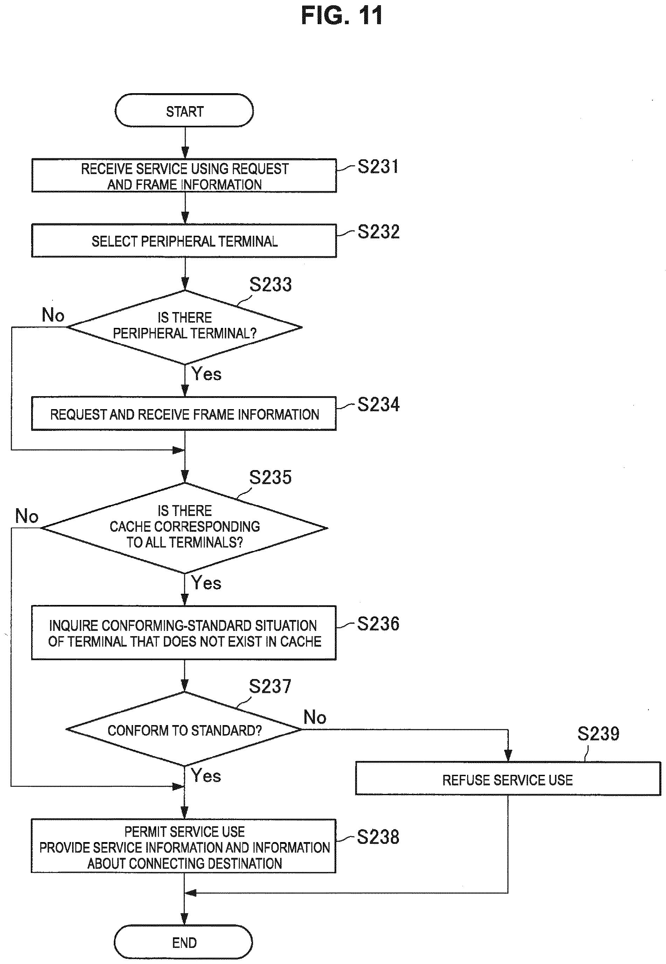

Subsequently, a description will be given of an operational example of the server 200 according to the second embodiment of the embodiments in the present disclosure. FIG. 11 is a flowchart illustrating the operational example of the server 200 according to the second embodiment of the embodiments in the present disclosure.

The server 200 receives the service using request and the frame information of the terminal device 100a from the terminal device 100a that is to use the service (step S231), and further selects a peripheral terminal capable of cooperating with the terminal device 100a (step S232). Processing in step S232 is executed by, for example, the peripheral terminal selecting unit 221. An example is given of the processing for selecting the peripheral terminal. In a case where there is a peripheral terminal (herein, the terminal device 100b) that logs in with the same ID as the user ID of the terminal device 100a, the server 200 selects the terminal device 100b as the peripheral terminal. Obviously, the server 200 can use a condition except for the login with the same user ID, as the processing for selecting the peripheral terminal.

The server 200 determines whether or not there is a peripheral terminal (step S233). If determining that there is the peripheral terminal (step S233, Yes), the server 200 requests the frame information from the peripheral terminal (terminal device 100b), and receives the frame information from the peripheral terminal (step S234). On the other hand, if the server 200 determines that there is not the peripheral terminal (step S233, No), the processing in step S234 is skipped.

Subsequently, in a case where there are the terminal device 100a that is to use the service and the peripheral terminal, the server 200 determines whether or not there is the cache corresponding to all the terminal devices including the peripheral terminal in the server 200 (step S235). If there is not the cache corresponding to all the terminal devices in the server 200 (step S235, No), the server 200 inquires the conforming-standard situation of the terminal device that does not exist in the cache from the database 300 (step S236). After inquiring it from the database 300, the server 200 determines whether or not the terminal device (whose cache does not exist) conforms to the standard (step S237). If the terminal device conforms to the standard (step S237, Yes), the server 200 gives the terminal device a service using permission, and provides the information of the terminal device as the connecting destination in addition to the service information to the terminal device 100a (step S238). Note that if it is determined in the step S235 that there is the cache corresponding to all the terminal devices in the server 200 (step S235, Yes), the server 200 performs the processing in step S238.

On the other hand, if the terminal device (whose cache does not exist) does not conform to the standard as a determining result in the step S237 (step S237, No), the server 200 refuses the use of the service to the terminal device (step S239).

### [1.4. Third embodiment]

### (1.4.1. System configuration example)

Subsequently, a description will be given of the third embodiment of the embodiments in the present disclosure. According to the second embodiment, the illustration is given of the case where the same user connects a plurality of the terminal devices 100a, 100b, and 100c to the network 10 and uses the devices. According to the third embodiment, a case will be illustrated of using the service by the terminal device in cooperation of two different servers.

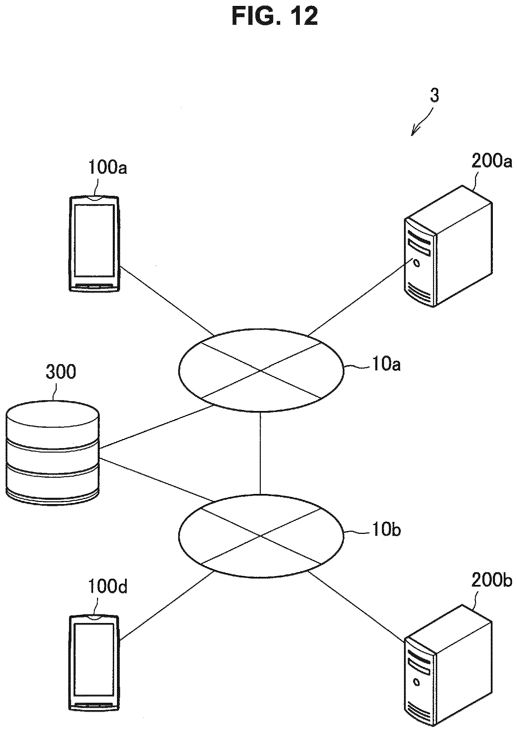

FIG. 12 is an explanatory diagram illustrating a configuration example of a communication system according to the third embodiment of the embodiments in the present disclosure. Hereinafter, a description will be given of the configuration example of the communication system according to the third embodiment of the embodiments in the present disclosure with reference to FIG. 12.

As illustrated in FIG. 12, a communication system 3 according to the second embodiment of the embodiments in the present disclosure includes the terminal devices 100a and 100d, the servers 200a and 200b, and the database 300. The terminal device 100a and the server 200a are respectively connected to the same network 10a. Further, the terminal device 100d and the server 200b are respectively connected to the same network 10b. The network 10a and the network 10b are connected in a wireless or wired manner. The network 10a and the network 10b are connected, thereby enabling cooperation of the terminal devices or the servers connected to different networks.

Further, the database 300 is connected to both the networks 10a and 10b to be capable of being referred to from both the networks. Information about conformity of the terminal devices 100a and 100d to the standard is cached to the servers 200a and 200b. However, in a case where it is desirable to refer to the database 300 because a certain time passes after caching, the servers 200a and 200b refer to the database 300 via the respective networks 10a and 10b.

Note that specific configurations of the terminal devices 100a and 100d are similar to that of the terminal device 100 according to the first embodiment. Therefore, a specific description thereof is omitted. Further, specific configurations of the servers 200a and 200b are similar to that of the server 200 according to the first embodiment. Therefore, a specific description thereof is omitted.

According to the third embodiment, the networks 10a and 10b can be vehicles. For example, the server 200a may be a car navigation system of a vehicle. It is possible to consider a case in which a driver or a passenger of a vehicle connects the terminal device 100a to the network 10a for using the car navigation system. Similarly, the server 200b may be a car navigation system of a vehicle. It is possible to consider a case in which the driver or the passenger of the vehicle connects the terminal device 100d to the network 10b for using the car navigation system.

In this case, the networks 10a and 10b perform vehicle-to-vehicle communication (V2V), thereby enabling the cooperation of the service provided by the server 200a and the service provided by the server 200b. In the case, for example, if a distance between vehicles obtained by processing for obtaining GPS information or another positional information is within a predetermined distance (e.g., 100 m), WLAN communication is used for the vehicle-to-vehicle communication. If the distance is a predetermined one or more, WWAN communication can be used for the vehicle-to-vehicle communication.

Further, according to the third embodiment, the network 10a can be a flying object that autonomously flies, such as a drone. For example, the server 200a can be a processing device provided for the flying object, and the terminal device 100a can be a camera with a wireless communication function provided for the flying object. Similarly, the server 200b can be a processing device provided for another flying object, and the terminal device 100b can be the camera with the wireless communication function provided for the flying object.

In the case, the network 10a wirelessly communicates with the network 10b, thereby enabling the cooperation of services provided by the two flying objects. In such a case, for example, the terminal device with a smaller remaining amount of a battery assigns processing with high load, such as video distribution to the terminal device with a larger remaining amount of the battery, thereby enabling the terminal device with a smaller remaining amount of the battery to fly for a longer time.

The above description is given of the configuration example of the communication system according to the third embodiment of the embodiments in the present disclosure with reference to FIG. 12. Subsequently, a description will be given of an operational example of the communication system according to the third embodiment of the embodiments in the present disclosure.

### (1.4.2. Operational example)

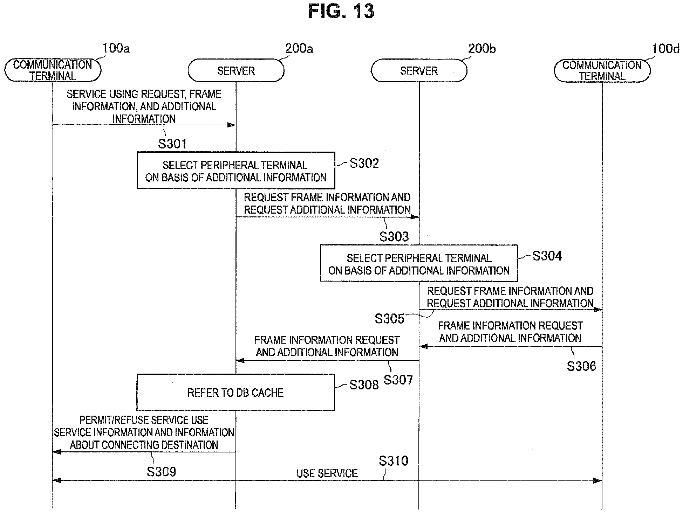

FIG. 13 is a flowchart illustrating an operational example of the communication system 3 according to the third embodiment of the embodiments in the present disclosure. FIG. 13 illustrates, as a sequence diagram, operational flows of the terminal devices 100a and 100d and the servers 200a and 200b in a case where the terminal device 100a newly uses a service. Hereinafter, a description will be given of the operational example of the communication system 3 according to the third embodiment of the embodiments in the present disclosure with reference to FIG. 13.

In a case of newly using the service, the terminal device 100a sends a service using request to the server 200a that provides the service, and also sends the frame information of the terminal device 100a and additional information to the server 200a (step S301). Processing in step S301 is executed by, for example, the service information processing unit 121 and the frame information processing unit 122. In a case where the terminal device 100a sends the frame information of the terminal device 100a to the server 200a, information of a version number of the terminal device 100a may be included. The terminal device 100a may send as the additional information, for example, positional information of the terminal device 100a, information of a remaining amount of a battery in a case of driving with the battery, or the like.

The server 200a that receives the service using request, the frame information of the terminal device 100a, and the additional information from the terminal device 100a selects a peripheral terminal capable of cooperating with the terminal device 100a (step S302). Processing in step S302 is executed by, for example, the peripheral terminal selecting unit 221. In a case of selecting the peripheral terminal, the server 200a may select the peripheral device on the basis of positional information of GPS or the like or a remaining amount of a battery. For example, the server 200a may select a terminal device within a radius of 100 m, belonging to the same network on the basis of the positional information. Further, for example, the server 200a may select a terminal device with the remaining amount of the battery that is a predetermined ratio or more (e.g., remaining 70% or more). In a case where there is not the terminal device in the same network, the server 200a selects a peripheral server that provides a service that is requested by the terminal device 100a. In a case of selecting the peripheral server, the server 200a may use a simple service discovery protocol (SSDP) used for UPnP, Bonjour as one zero configuration technology, a service finding technology with generic advertisement service (GAS) determined by IEEE 802.11u, or another device finding protocol.

In the example illustrated in FIG. 13, it is assumed that the server 200a selects the server 200b as the peripheral terminal. The server 200a requests the frame information and the additional information from the server 200b selected as the peripheral terminal (step S303). Processing in step S303 is executed by, for example, the frame information processing unit 226.

The server 200b that receives the request of the frame information and the additional information from the server 200a selects the peripheral terminal (step S304). Processing in step S304 is executed by, for example, the peripheral terminal selecting unit 221. The processing for selecting the peripheral terminal with the server 200b is similar to the above description in step S302.

In the example illustrated in FIG. 13, it is assumed that the server 200b selects the terminal device 100d as the peripheral terminal. The server 200b requests the frame information and the additional information from the terminal device 100d selected as the peripheral terminal (step S305). Processing in step S305 is executed by, for example, the frame information processing unit 226. The terminal device 100d sends the frame information of the terminal device 100d and the additional information to the server 200b (step S306). Processing in step S306 is executed by, for example, the frame information processing unit 122. At least WSC IE of the terminal device 100b is included in the frame information sent by the terminal device 100d and P2P IE, WFD IE, or the like may be additionally included therein. Further, the terminal device 100d may send as the additional information, for example, positional information of the terminal device 100d, information of the remaining amount of the battery in a case of driving with the battery, or the like.

The server 200b that receives the frame information of the terminal device 100d and the additional information from the terminal device 100d sends the received information to the server 200a (step S307).

The server 200a that receives the frame information of the terminal device 100d and the additional information from the server 200b analyzes the frame information of the terminal devices 100a and 100d. Subsequently, the server 200a refers to the cache of the database stored in the storing unit 230 on the basis of the information included in the frame information (step S308). Processing in step S308 is executed by, for example, the frame information processing unit 226.

Subsequently, the server 200a notifies the terminal device 100a whether or not the service is available, on the basis of the conforming-standard situation of the terminal device 100a obtained from the cache (step S309). Processing in step S309 is executed by, for example, the service information processing unit 225. Further, in a case where the terminal device 100a can use the service, the server 200a sends the information of the terminal device 100d as the connecting destination in addition to the service information to the terminal device 100a. The information of the terminal device 100d as the connecting destination is, for example, information necessary for connection to the terminal device 100d by the terminal device 100a, for example, P2P IE or WFD IE received from the terminal device 100d by the server 200b, or the like.

The terminal device 100a receives the notification about whether or not the service is available from the server 200a in the step S309, and starts to use the service in a case where the service is available and ends a series of procedures in a case where the use of the service is refused (step S310). In the case where the service is available, the terminal device 100a enters a downloadable state of, for example, application for using the services. Further, in the case where the service is not available, the terminal device 100a outputs, to the output unit 140, for example, a screen showing that the service is not available.

The above description is given of the operational example of the communication system 3 according to the third embodiment of the embodiments in the present disclosure with reference to FIG. 13.

### <3. Conclusion>

As mentioned above, according to the embodiments in the present disclosure, a terminal device is provided to enable knowing whether or not the terminal device conforms to a service using a communication network before executing the service. Further, as mentioned above, according to the embodiments in the present disclosure, a server is provided to enable knowing whether or not the terminal device conforms to the service using the communication network before executing the service.

According to the embodiments in the present disclosure, in a case of using a service in cooperation with two or more terminal devices, the server checks the complying-standard situation of all terminal devices as connecting partners. Therefore, according to the embodiments in the present disclosure, it is possible to improve the connecting compatibility between the terminal devices.

According to the embodiments in the present disclosure, regarding Wi-Fi authentication, it is possible to correspond to various Wi-Fi connecting services that will newly appear in the future, including WFDS as well as the mirroring service. Further, the system can be applied to authentication using Bluetooth (registered trademark) or another wireless manner.

According to the embodiments in the present disclosure, for example, if the user is in a facility at an out-destination and the user is a member of services unified by the server, a service with high quality to ensure connection compatibility is available.

According to the embodiments in the present disclosure, since device information (P2P IE) of a connecting partner is known, the terminal device can be quickly connected to the connecting partner by using channel information or device address.

According to the embodiments in the present disclosure, the terminal device or the server device receives or sends the positional information or the remaining amount of the battery in addition to the frame information. As a result, it is possible to efficiently use services, e.g., assignment of resources preferentially to a terminal with a large remaining amount of the battery by using a best service between terminal devices in progress of moving, or the like.

According to the embodiments in the present disclosure, the terminal device sends WSC IE to the server, thereby easily finding the terminal device with the same vender or the same model name from the periphery via the server. As a consequence, the server can recommend a service developed by the same vender to a user or search a terminal device that can be cooperated even in a case of a terminal device of another company for connection support.

According to the embodiments in the present disclosure, application to Internet of things (IoT) is possible. As an example, in a case where the server is a processing server of a video monitoring system and the terminal device is a video camera, it is possible to manage entering and leaving by matching video images obtained from the terminal device with a facial authenticating database via the server.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A server device including:
   a processing unit that inquires presence or absence of conformity of a first communication device to a standard for using a service by using frame information sent with a using request of the service obtained from the first communication device, and notifies the first communication device whether or not the service is available, on a basis of an inquiring result.
(2) The server device according to (1),
   in which the processing unit requests sending of the frame information from a second communication device whose cooperation is desired by the first communication device, and inquires the presence or absence of the conformity of the first communication device and the second communication device to the standard for using the service by using the frame information obtained from each of the first communication device and the second communication device.
(3) The server device according to (2),
   in which, in a case where the first communication device and the second communication device conform to the standard for using the service, the processing unit sends at least a part of the frame information obtained from the second communication device to the first communication device.
(4) The server device according to (2) or (3),
   in which there are a plurality of the second communication devices whose cooperation is desired by the first communication device.
(5) The server device according to any of (2) to (4),
   in which the processing unit requests sending of the frame information from another server device connected to the second communication device via a network different from a network connected to the first communication device.
(6) The server device according to any of (1) to (5),
   in which the service uses direct connection between devices via wireless communication.
(7) The server device according to (6),
   in which the wireless communication is wireless local area network (LAN) communication, and the direct connection complies with Wi-Fi Direct.
(8) The server device according to any of (1) to (7),
   in which the processing unit inquires the presence or absence of the conformity to the standard from a database that holds a standard conforming situation of a communication device.
(9) The server device according to (8),
   in which the processing unit caches an inquiring result of the database, and refers to cached data in a case of an inquiry addressed to the same first communication device.
(10) A communication device including:
   a processing unit that sends frame information to a server device with a using request of a service, and receives availability of the service from the server device, the availability being determined on a basis of the frame information.
(11) The communication device according to (10),
   in which the processing unit allows the frame information to include device version information.
(12) The communication device according to (10),
   in which, in a case of receiving a notification from the server device that the requested service is available, the processing unit allows a screen for downloading application for using the service to be displayed.
(13) The communication device according to any of (10) to (12),
   in which the service uses direct connection between devices via wireless communication.
(14) The communication device according to (13),
   in which the wireless communication is wireless local area network (LAN) communication, and the direct connection complies with Wi-Fi Direct.
(15) A method including:
   inquiring presence or absence of conformity of a first communication device to a standard for using a service by using frame information sent with a using request of the service obtained from the first communication device, and notifying the first communication device whether or not the service is available, on a basis of an inquiring result.
(16) A method including:
   sending frame information to a server device with a using request of a service, and receiving availability of the service from the server device, the availability being determined on a basis of the frame information.
(17) A computer program that causes a computer to execute:
   inquiring presence or absence of conformity of a first communication device to a standard for using a service by using frame information sent with a using request of the service obtained from the first communication device, and notifying the first communication device whether or not the service is available, on a basis of an inquiring result.
(18) A computer program that causes a computer to execute:
   sending frame information to a server device with a using request of a service, and receiving availability of the service from the server device, the availability being determined on a basis of the frame information.

### Reference Signs List

- 1: communication system
- 2: communication system
- 3: communication system
- 100: terminal device
- 100a: terminal device
- 100b: terminal device
- 100c: terminal device
- 100d: terminal device
- 200: server
- 200a: server
- 200b: server
- 300: database

## Claims

1. A server device comprising:
a processing unit that inquires presence or absence of conformity of a first communication device to a standard for using a service by using frame information sent with a using request of the service obtained from the first communication device, and notifies the first communication device whether or not the service is available, on a basis of an inquiring result.

2. The server device according to claim 1,
wherein the processing unit requests sending of the frame information from a second communication device whose cooperation is desired by the first communication device, and inquires the presence or absence of the conformity of the first communication device and the second communication device to the standard for using the service by using the frame information obtained from each of the first communication device and the second communication device.

3. The server device according to claim 2,
wherein, in a case where the first communication device and the second communication device conform to the standard for using the service, the processing unit sends at least a part of the frame information obtained from the second communication device to the first communication device.

4. The server device according to claim 2,
wherein there are a plurality of the second communication devices whose cooperation is desired by the first communication device.

5. The server device according to claim 2,
wherein the processing unit requests sending of the frame information from another server device connected to the second communication device via a network different from a network connected to the first communication device.

6. The server device according to claim 1,
wherein the service uses direct connection between devices via wireless communication.

7. The server device according to claim 6,
wherein the wireless communication is wireless local area network (LAN) communication, and the direct connection complies with Wi-Fi Direct.

8. The server device according to claim 1,
wherein the processing unit inquires the presence or absence of the conformity to the standard from a database that holds a standard conforming situation of a communication device.

9. The server device according to claim 8,
wherein the processing unit caches an inquiring result of the database, and refers to cached data in a case of an inquiry addressed to the same first communication device.

10. A communication device comprising:
a processing unit that sends frame information to a server device with a using request of a service, and receives availability of the service from the server device, the availability being determined on a basis of the frame information.

11. The communication device according to claim 10,
wherein the processing unit allows the frame information to include device version information.

12. The communication device according to claim 10,
wherein, in a case of receiving a notification from the server device that the requested service is available, the processing unit allows a screen for downloading application for using the service to be displayed.

13. The communication device according to claim 10,
wherein the service uses direct connection between devices via wireless communication.

14. The communication device according to claim 13,
wherein the wireless communication is wireless local area network (LAN) communication, and the direct connection complies with Wi-Fi Direct.

15. A method comprising:
inquiring presence or absence of conformity of a first communication device to a standard for using a service by using frame information sent with a using request of the service obtained from the first communication device, and notifying the first communication device whether or not the service is available, on a basis of an inquiring result.

16. A method comprising:
sending frame information to a server device with a using request of a service, and receiving availability of the service from the server device, the availability being determined on a basis of the frame information.
